# EUROPEAN PATENT APPLICATION

(11) **EP 4 390 617 A1**
(43) Date of publication of application: **26.06.2024**
(21) Application number: 23170360.4
(22) Date of filing: 27.04.2023
(51) Int. Cl.: G06F 1/16, G02B 27/01, G06F 3/01, G06F 3/04886, G06F 3/04817, G06F 3/04842, G09B 21/00

(54) **INFORMATION INTERACTION METHOD AND ELECTRONIC DEVICE**

(30) Priority: 23.12.2022 CN 202211664105
(71) Applicant: Beijing Xiaomi Mobile Software Co., Ltd., Beijing 100085 (CN)
(72) Inventor: ZHOU, Yuhan, Beijing, 100085 (CN); YU, Zhixiong, Beijing, 100085 (CN); CHEN, Jialu, Beijing, 100085 (CN)
(74) Representative: Stöckeler, Ferdinand

(57) **Abstract**

An information interaction method is applied to a mobile terminal and includes: displaying (S11) at least one touch area configured to control a moving speed of a cursor on a touch screen of the mobile terminal, in response to detecting an operation on the mobile terminal; and sending (S12) a first control instruction to a wearable device in response to detecting a touch operation in any touch area, the first control instruction being configured to instruct the cursor on a display interface of the wearable device to move according to the moving speed indicated by the touch area.

## Description

### TECHNICAL FIELD

The present invention relates to the field of communication technology, and more particularly to an information interaction method and an electronic device.

### BACKGROUND

With the development of intelligent technology, a wearable device is becoming increasingly popular. In order to improve the portability, operability, and functionality of the wearable device, more and more wearable devices are beginning to connect with the mobile terminal in a wired or wireless manner, thus enabling a user to operate and control the wearable device through the mobile terminal. For example, the user can control the display of the screen in AR (Augmented Reality) or VR (Virtual Reality) glasses through touch manipulation of a phone with a touch screen. An interaction mode between the wearable device and the mobile terminal provides improved functionality for the user.

### SUMMARY

The present invention provides an information interaction method according to claim 1 or 8 and an electronic device according to claim 13. Further developments of the invention are set forth in the dependent claims.

According to a first aspect of embodiments of the present invention, an information interaction method is provided, which is applied to a mobile terminal. The method includes: displaying at least one touch area configured to control a moving speed of a cursor on a touch screen of the mobile terminal, in response to detecting an operation on the mobile terminal; and sending a first control instruction to a wearable device in response to detecting a touch operation in any touch area, the first control instruction being configured to instruct the cursor on a display interface of the wearable device to move according to the moving speed indicated by the touch area.

Optionally, displaying the at least one touch area configured to control the moving speed of the cursor on the touch screen in response to detecting the operation on the mobile terminal includes: displaying the at least one touch area configured to control the moving speed of the cursor centered on a touch position of the touch operation in response to detecting the touch operation on the touch screen of the mobile terminal.

Optionally, the at least one touch area configured to control the moving speed of the cursor includes at least two touch areas centered on the touch position, and each touch area is circular.

Optionally, the touch screen includes at least one functional partition, and displaying the at least one touch area configured to control the moving speed of the cursor on the touch screen of the mobile terminal in response to detecting the operation on the mobile terminal includes: displaying the at least one touch area configured to control the moving speed of the cursor on the touch screen of the mobile terminal in response to detecting the touch operation in a first functional partition of the at least one functional partition, and the first functional partition being a partition configured to control a movement of the cursor.

Optionally, the method further includes: sending a second control instruction to the wearable device in response to detecting the touch operation in a second functional partition of the at least one functional partition, the second control instruction being configured to control the wearable device to perform a function indicated by the second control instruction, and the second functional partition being a partition configured to control the wearable device to perform a function.

Optionally, the second functional partition includes a first control part and/or a second control part. Sending the second control instruction to the wearable device in response to detecting the touch operation in the second functional partition of the at least one functional partition includes: sending a selecting instruction for a target object pointed to by the cursor on the display interface to the wearable device in response to detecting a click operation on the first control part in the second functional partition; and/or, sending a device adjusting instruction to the wearable device in response to detecting a click operation on the second control part in the second functional partition, and the device adjusting instruction being configured to control the wearable device to perform one of following operations: volume adjustment, work mode adjustment, and cursor position calibration.

Optionally, the touch screen displays a third control part and/or a fourth control part, and the method further includes: displaying a notification message in the wearable device in response to detecting a sliding operation on the third control part; and/or, displaying a menu in the wearable device in response to detecting a sliding operation on the fourth control part.

According to a second aspect of the embodiments of the present invention, an information interaction method is provided, which is applied to a wearable device. The method includes: receiving a first control instruction sent by a mobile terminal, a touch screen of the mobile terminal including at least one touch area configured to control a moving speed of a cursor, and the first control instruction being sent by the mobile terminal after detecting a touch operation in any touch area of the touch screen; and moving the cursor on a display interface of the wearable device at the moving speed indicated by the touch area according to the first control instruction.

Optionally, the method further includes: changing a display state of a preset position range of a preset object on the display interface when the cursor moves into the preset position range of the preset object on the display interface according to the moving speed indicated by the touch area.

Optionally, the display interface includes a main interface displayed after establishing a communication with the mobile terminal, and the main interface includes an application icon; and changing the display state of the preset position range of the preset object on the display interface when the cursor moves into the preset position range of the preset object on the display interface according to the moving speed indicated by the touch area includes: highlighting a preset peripheral area of the application icon on the main interface when the cursor moves to the preset peripheral area of the application icon on the main interface according to the moving speed indicated by the touch area.

Optionally, wherein the display interface includes an editing interface including a virtual keyboard, and the virtual keyboard includes a plurality of function keys; and changing the display state of the preset position range of the preset object on the display interface when the cursor moves into the preset position range of the preset object on the display interface according to the moving speed indicated by the touch area includes: when the cursor moves to an area where any function key on the virtual keyboard is located according to the moving speed indicated by the touch area, highlighting the area of the function key where the cursor is located.

Optionally, the method further includes: displaying the cursor in a predetermined form when the cursor moves to an area on the editing interface except the virtual keyboard; and hiding the cursor when the cursor moves to the area on the editing interface where any function key of the virtual keyboard is located.

According to a third aspect of the embodiments of the present invention, an electronic device is provided. The device includes: a processor; and a memory configured to store an instruction executable by the processor. The processor is configured to perform the information interaction method according to the first aspect or the information interaction method according to the second aspect.

The technical solution provided by the embodiments of the present invention can include the following beneficial effects.

In the embodiments of the present invention, the mobile terminal displays the at least one touch area configured to control the moving speed of the cursor on the touch screen based on the user operation, such that the cursor on the display interface of the wearable device may move according to the moving speed indicated by the touch area. For example, the cursor may be accurately positioned based on the indicated slow moving speed. Or, when encountering a scene where an extensive movement is needed, the cursor may move based on the indicated fast moving speed, without the user controlling the touch screen of the mobile terminal many times, which can reduce the complexity of the user operation and make the interaction manner between the mobile terminal and the wearable device friendly.

It should be understood that the foregoing general description and the following detailed description are merely illustrative and explanatory, and should not be construed to limit the present invention.

### BRIEF DESCRIPTION OF THE DRAWINGS

The accompanying drawings herein are incorporated into and form a part of the specification, which illustrates embodiments that comply with the present invention, and are used to explain the principle of the present invention together with the specification.
Fig. 1 is a flow chart of an information interaction method for use with a mobile terminal, according to an embodiment of the present invention.
Fig. 2 is a schematic view of a touch area according to an embodiment of the present invention.
Fig. 3 is a schematic view of a functional partition according to an embodiment of the present invention.
Fig. 4 is another flow chart of an information interaction method according to an embodiment of the present invention.
Fig. 5 is a schematic view of a display interface of a wearable device according to an embodiment of the present invention.
Fig. 6 is another schematic view of a display interface of a wearable device according to an embodiment of the present invention.
Fig. 7 is another schematic view of a display interface of a wearable device according to an embodiment of the present invention.
Fig. 8 is a flow chart of an information interaction method according to an embodiment of the present invention.
Fig. 9 is a block diagram of an information interaction device according to an exemplary embodiment of the present invention.
Fig. 10 is another block diagram of an information interaction device according to an exemplary embodiment of the present invention.
Fig. 11 is a block diagram of an electronic device according to an exemplary embodiment of the present invention.

### DETAILED DESCRIPTION

Embodiments will be described in detail, and examples of the embodiments are shown in the drawings. When the following description relates to the accompanying drawings, the same numbers in different accompanying drawings represent the same or similar elements, unless otherwise indicated. The implementations described in the following embodiments do not represent all the implementations consistent with the present invention. Instead, they are only examples of devices and methods consistent with some aspects of the present invention as detailed in the appended claims.

In the related art, one manner for a smartphone to interact with AR (or VR) glasses is to configure the phone into a pointer. A virtual pointing arrow is displayed on a glasses screen, and a pointing direction of the virtual pointing arrow on the glasses screen is controlled by rotating a front end of the phone upwards, downwards, leftwards and rightwards. When the virtual pointing arrow on the glasses screen stays on a certain key, a click function or a drag function may be realized. When encountering a scene where typing is required, a user needs to remove the glasses and type on a keyboard displayed on the phone, or adjust the position of the virtual pointing arrow on a virtual keyboard on the glasses by rotating the pointing direction of the phone, and then click a small letter key on the virtual keyboard of the glasses to determine the output of a certain character.

The above technique is difficult to use for several reasons. On the one hand, the phone functions as the pointer based on a gyroscope. Due to a drift error (error accumulated over time becomes larger and larger) and so on existing in the gyroscope, the pointing direction of the virtual pointing arrow displayed on the glasses is different from the actual pointing direction of a top of the phone after multiple usages of the phone, such that the user needs to re-click a calibration key on the phone to calibrate the pointing direction, which affects the user experience. On the other hand, the operating manner based on the phone pointer requires the user to continuously rotate his wrist joint, while requiring a certain actual operating space. However, the weight of the phone is approximately between 150 grams and 250 grams, and the user may experience fatigue and wrist pain after holding it for a long time. Further, this interaction manner has low accuracy and requires frequent calibration of the pointing direction, which may be troublesome when typing Chinese characters or letters. Typing a word takes more than ten times as long as typing it directly from the phone keyboard.

Another manner for the smartphone to interact with the glasses is to configure a phone screen into a touch pad. A cursor is displayed on the screen of the glasses. By sliding on the touch pad of the phone with a finger, the cursor is moved on the screen of the glasses. When encountering a scene where typing is required, the user may type directly on the keyboard of the phone, or he may realize the output of the character or word by sliding on the touch pad on the phone and clicking on the virtual keyboard of the glasses.

The above manner has the following problems. On the one hand, when encountering a scene that requires an extensive movement in a virtual interface in the glasses, such as moving the cursor located in the lower left corner of the glasses screen to the upper right corner of the glasses screen, due to the insufficient distance caused by sliding on the phone screen at one time, it is necessary for the user to slide on the phone screen many times to achieve the extensive movement of the cursor on the glasses, which may increase operation complexity. On the other hand, when typing or clicking an icon of an application on the glasses screen, it is necessary to fine-tune the cursor to determine whether the cursor falls on a certain key on the virtual keyboard, or on the icon of the application, which is inconvenient to manipulate.

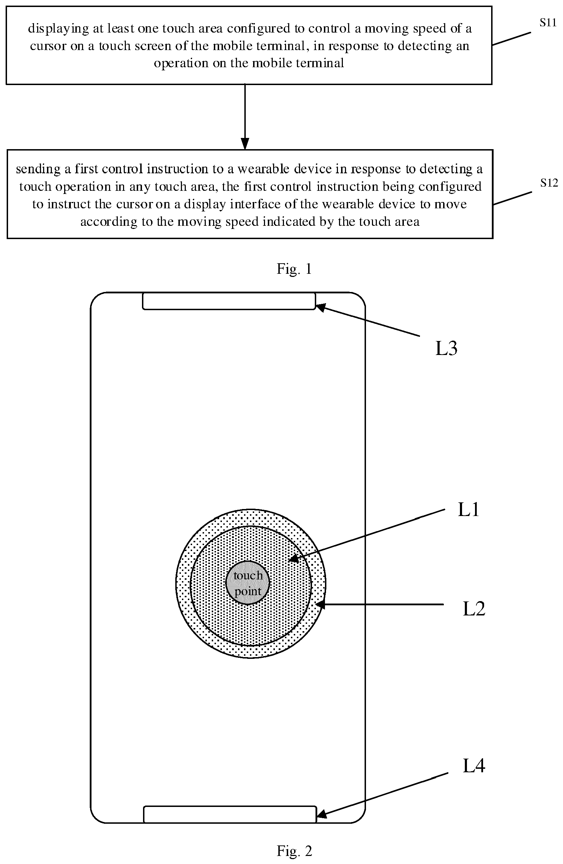

To this end, embodiments of the present invention provide an information interaction method. Fig. 1 is a flow chart of an information interaction method according to the embodiments of the present invention, which is applied to a mobile terminal. As shown in Fig. 1, the information interaction method includes the following steps.

At step S 11, at least one touch area configured to control a moving speed of a cursor is displayed on a touch screen of the mobile terminal in response to detecting an operation on the mobile terminal.

At step S12, a first control instruction is sent to a wearable device in response to detecting a touch operation in any touch area. The first control instruction is configured to instruct the cursor on a display interface of the wearable device to move according to the moving speed indicated by the touch area.

In the embodiments of the present invention, the mobile terminal is, for example, a smart home device such as a smartphone, a tablet computer, a notebook, a game console, or a smart speaker. The mobile terminal includes the touch screen, and may detect an operation of the user through the touch screen and generate a corresponding control instruction. In addition, the mobile terminal may also display a picture on the touch screen. The wearable device may be AR or VR glasses, as well as a head mounted display (HMD), a smart watch, etc. The wearable device may also display a picture. The embodiments of the present invention do not limit the types of the mobile terminal and the wearable device.

At step S11, the mobile terminal displays the at least one touch area configured to control the moving speed of the cursor on the touch screen in response to detecting the operation on the mobile terminal. The operation on the mobile terminal detected by the mobile terminal may be a voice operation. For example, after detecting a voice of "Please display the touch area", the mobile terminal resolves the voice and displays the touch area configured to control the moving speed of the cursor. The operation detected by the mobile terminal may also be a touch operation on the touch screen, such as a preset number of click operations.

In the embodiments of the present invention, the cursor refers to a cursor on the display interface of the wearable device in communication with the mobile terminal. One or more touch areas configured to control the moving speed of the cursor may be provided, and a shape and a position of the touch area are not limited. For example, two touch areas may be provided. One touch area is configured to control the cursor to move slowly, such that the cursor on the display interface of the wearable device may be accurately positioned based on a slow moving speed. The other touch area is configured to control the cursor to move fast, such that the cursor on the display interface of the wearable device may move a large distance in a short time based on a fast moving speed.

It should be noted that before the mobile terminal detects the operation, the touch screen of the mobile terminal may also control the movement of the cursor. For example, based on a moving direction and a moving distance of the user on the touch screen of the mobile terminal, the mobile terminal may control the cursor on the display interface of the wearable device to move in the direction indicated by the user, and move a distance corresponding to the moving distance made by the user on the touch screen of the mobile terminal. However, before the touch area configured to control the moving speed of the cursor is displayed on the touch screen, the touch screen may only control the moving distance and the moving direction of the cursor, but may not control the moving speed of the cursor. In some cases, the touch screen of the mobile terminal indicates the moving distance, and the wearable device indicates that the cursor moves the corresponding distance at a predetermined speed. After the mobile terminal forms the at least one touch area, the moving speed of the cursor indicated by the at least one touch area may be different from the predetermined speed of the wearable device.

At step S12, the mobile terminal sends the first control instruction configured to instruct the cursor to move according to the moving speed indicated by the touch area to the wearable device, in response to detecting a touch operation in any touch area. In some embodiments, the first control instruction may carry the moving speed indicated by the touch area. In other embodiments, a manner of the touch operation may have a correspondence with the moving speed of the cursor. The first control instruction may carry information identifying the manner of the touch operation. The wearable device determines the moving speed of the cursor based on this correspondence and then moves the cursor. For example, the moving speed corresponding to the touch operation of two consecutive clicks may be greater than the moving speed corresponding to the touch operation of one click.

It should be noted that, in the embodiments of the present invention, the mobile terminal and the wearable device may be in communication with each other by a wired or wireless means. For example, the mobile terminal and the wearable device may be in wired communication with each other through a Universal Serial Bus (USB), and may also be in wireless communication with each other based on a Wi-Fi technology, a D2D communication technology, or the like. After the mobile terminal establishes the communication with the wearable device and before the mobile terminal displays the touch area configured to control the moving speed of the cursor, the touch screen of the mobile terminal may control the cursor on the display interface of the wearable device to move according to the direction and the distance indicated by the user based on the above method.

It can be understood that in embodiments of the present invention, the mobile terminal displays the at least one touch area configured to control the moving speed of the cursor on the touch screen based on the user operation, such that the cursor on the display interface of the wearable device may move according to the moving speed indicated by the touch area. For example, the cursor may be accurately positioned based on an indicated slow moving speed. Or, when encountering a scene where an extensive movement is needed, the cursor may move based on the indicated fast moving speed, without the user controlling the touch screen of the mobile terminal many times, which can reduce the complexity of the user operation and make the interaction manner between the mobile terminal and the wearable device friendly.

In some embodiments, displaying the at least one touch area configured to control the moving speed of the cursor on the touch screen in response to detecting the operation on the mobile terminal includes: displaying the at least one touch area configured to control the moving speed of the cursor centered on a touch position of the touch operation, in response to detecting the touch operation on the touch screen of the mobile terminal.

In some embodiments of the present invention, after detecting the touch operation on the touch screen, the mobile terminal displays the touch area centered on the touch position of the touch operation. For example, when a single click operation on the touch screen is detected, one touch area configured to control the moving speed of the cursor centered on a click position is displayed. For another example, when a click duration of the click operation is greater than a preset duration threshold, a plurality of touch areas configured to control the moving speed of the cursor centered on the click position are displayed. That is, the plurality of touch areas configured to control the moving speed of the cursor are displayed while being centered on the click position. Further, each touch area is centered on the click position.

In some embodiments, different touch positions may also indicate different moving speeds. For example, the touch operation may be applied in an upper half of the touch screen, and the moving speed indicated by the displayed touch area centered on the touch position of this touch operation may be greater than the moving speed indicated by the touch area formed based on the touch operation in a lower half of the touch screen.

In some embodiments, the touch operation in the touch area may also be configured to indicate the moving direction of the cursor. For example, an included angle between a connecting line of a touch operation point of the touch area and a center of the touch area and a horizontal direction or a vertical direction may correspond to the moving direction of the cursor on the wearable device. The first control instruction may also be configured to instruct the cursor on the display interface of the wearable device to move according to the moving direction indicated by the touch operation. The first control instruction may carry the moving direction of the cursor. Or, the first control instruction may also carry the above included angle, and the wearable device determines the moving direction of the cursor according to a correspondence between the included angle and the moving direction, and then moves the cursor at the moving speed indicated by the touch area.

It can be understood that in some embodiments of the present invention, the touch area centered on the touch position of the touch operation is displayed, which is convenient for dynamically creating the touch area, has good intelligence, and can improve the user experience.

It should be noted that the number and the shape of the displayed touch area centered on the touch position may also be arbitrary. In some embodiments, the at least one touch area configured to control the moving speed of the cursor includes at least two touch areas centered on the touch position, and each touch area is circular.

Fig. 2 is a schematic view of a touch area in the embodiments of the present invention. As shown in Fig. 2, the touch screen includes two touch areas. An area identified by L1 is a touch area configured to instruct the cursor to move slowly, an area identified by L2 is a touch area configured to instruct the cursor to move fast, and the areas identified by L1 and L2 are circular areas formed by being centered on a current touch point (i.e., the touch position). It should be noted that the touch operation detected by the mobile terminal in the touch area identified by L1 and the touch operation detected by the mobile terminal in the touch area identified by L2 result in different moving speeds of the cursor on the display interface of the wearable device. In particular, when encountering the scene that requires the extensive movement, such as moving the cursor located in the lower left corner of the display interface of the AR glasses to the upper right corner of the display interface of the AR glasses, the mobile terminal may send the first control instruction instructing the cursor to move fast to the wearable device based on the touch operation detected in the touch area identified by L2.

It can be understood that through dynamically creating two circular touch areas by the mobile terminal according to the current touch position, the user can selectively control the moving speed of the cursor based on the dynamically created touch areas conveniently, thus making the interaction intelligent and improving the user experience.

In some embodiments, the touch screen includes at least one functional partition. Displaying the at least one touch area configured to control the moving speed of the cursor on the touch screen of the mobile terminal in response to detecting the operation on the mobile terminal includes: displaying the at least one touch area configured to control the moving speed of the cursor on the touch screen of the mobile terminal, in response to detecting the touch operation in a first functional partition of the at least one functional partition. The first functional partition is a partition configured to control the movement of the cursor.

In some embodiments of the present invention, the touch screen of the mobile terminal includes the at least one functional partition, and the at least one functional partition may include the first functional partition. The first functional partition is, for example, a middle portion of the touch screen, or an upper middle portion of the touch screen, which is not limited in the embodiments of the present invention. The mobile terminal can display the touch area on the touch screen of the mobile terminal based on the touch operation detected in the first functional partition, as shown in Fig. 2.

In some embodiments, the method further includes: sending a second control instruction to the wearable device in response to detecting the touch operation in a second functional partition of the at least one functional partition. The second control instruction is configured to control the wearable device to perform a function indicated by the second control instruction, and the second functional partition is a partition configured to control the wearable device to perform functions.

In some embodiments of the present invention, the touch screen includes a plurality of functional partitions. One functional partition (the first functional partition) is configured to control the movement of the cursor, and the touch operation detected in this functional partition is configured to form the touch area. The touch operation detected in another functional partition (the second functional partition) is configured to trigger the mobile terminal to send the second control instruction to the wearable device to control the wearable device to perform the function indicated by the second control instruction. For example, the second control instruction may instruct the wearable device to open a file, adjust the volume, adjust the display brightness, etc, which is not limited in the embodiments of the present invention.

It should be noted that in the embodiments of the present invention, the display interface of the mobile terminal supports horizontal display or vertical display. For example, the display interface may support automatic switching and/or manual switching. When the touch screen displays the functional partitions, by switching the touch screen into the horizontal display (i.e., rotating the phone 90°), it is convenient for the user to manipulate the cursor of the wearable device in the first functional partition with the left hand, and to manipulate the wearable device to perform the function in the second functional partition with the right hand.

It can be understood that in the embodiments of the present invention, the touch screen of the mobile terminal is divided into the functional partitions, which facilitates the user to purposefully perform the operation in different partitions. For example, the pressure on the hand of the user while manipulating with one hand can be alleviated, thus realizing high intelligence.

In some embodiments, the second functional partition includes (i.e. displays) a first control part and/or a second control part. Sending the second control instruction to the wearable device in response to detecting the touch operation in the second functional partition of the at least one functional partition includes: sending a selecting instruction for a target object pointed to by the cursor on the display interface to the wearable device, in response to detecting a click operation on the first control part in the second functional partition; and/or, sending a device adjusting instruction to the wearable device in response to detecting a click operation on the second control part in the second functional partition. The device adjusting instruction is configured to control the wearable device to perform one of the following operations: volume adjustment, work mode adjustment, and cursor position calibration.

In some embodiments of the present invention, the second functional partition configured to control the wearable device to perform the function may include one or more control parts, and the mobile terminal may control the wearable device to perform the function indicated by the control part based on the click operation of the user on the control part. The mobile terminal detects the click operation on the first control part in the second functional partition and sends the selecting instruction for the target object pointed to by the cursor on the display interface to the wearable device. The target object may be an application icon or a control part on the display interface of the wearable device, or may be a function key on the virtual keyboard displayed by the wearable device.

It should be noted that in some embodiments of the present invention, on the display interface of the wearable device, when the cursor moves into a preset position range of the target object on the display interface, the preset position range on the display interface is displayed in highlight (i.e. highlighted), and the user may click the first control part at the mobile terminal based on the highlighted preset position range, so as to trigger the mobile terminal to send the selecting instruction for the target object to the wearable device.

In some embodiments of the present invention, when detecting the click operation on the second control part in the second functional partition, the mobile terminal sends the adjusting instruction configured to control the wearable device to perform the volume adjustment, the work mode adjustment, the cursor position calibration, and the like, to the wearable device.

For example, if the second control part is a volume adjustment control part, the mobile terminal detects the click operation on the volume adjustment control part, and sends an instruction for volume adjustment to the wearable device. The wearable device performs the volume adjustment based on this instruction.

If the second control part is a work mode adjustment control part, the mobile terminal detects the click operation on the work mode adjustment control part, and sends an instruction for work mode adjustment to the wearable device. The wearable device performs the mode adjustment based on this instruction. Taking the AR glasses as an example, the work mode includes, for example, an immersion mode, an outdoor mode, or a sport mode. Under different work modes, the display screen of the AR glasses displays with different brightness or displays different content on the display interface. For example, in the immersion mode, the display screen (an inner screen) of the AR glasses for viewing a projection interface is brighter, while the display screen (an outer screen) of the AR glasses for viewing an external scene is darker. However, in the outdoor mode, the display brightness of the inner screen and the outer screen are opposite to that in the immersion mode. For another example, in the sport mode, the display screen of the AR glasses is switched to display a map, and so on. It should be noted that the embodiments of the present invention do not limit the content of the work modes of the wearable device, such as the adjustment of various work modes such as a power saving mode and a flight mode.

If the second control part is a cursor position calibration control part, the mobile terminal detects the click operation on the cursor position calibration control part, and sends an instruction for cursor position calibration to the wearable device. The wearable device may calibrate the cursor position based on this instruction, for example returning to a middle position of the display interface set initially.

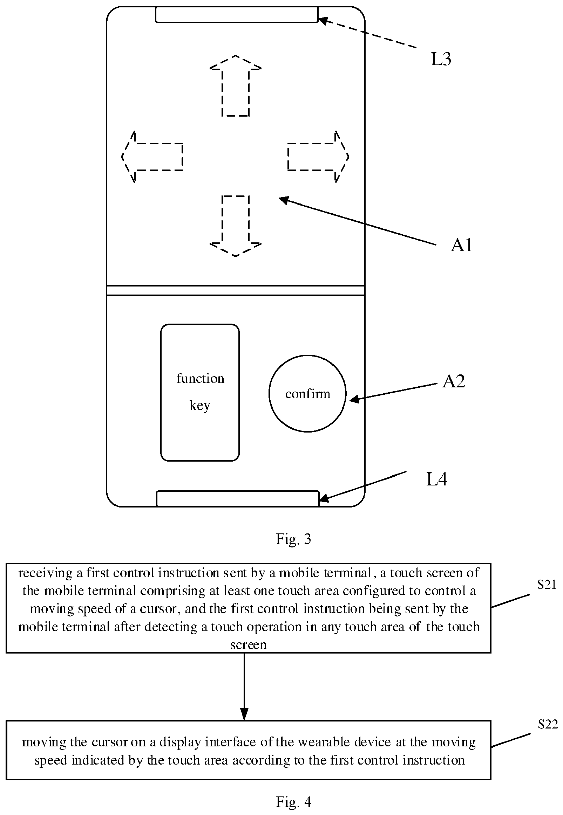

Fig. 3 is a schematic view of a functional partition in some embodiments of the present invention. As shown in Fig. 3, the touch screen of the phone is divided into two functional partitions, an area identified by A1 is the first functional partition, and an area identified by A2 is the second functional partition. The phone may display the touch area shown in Fig. 2 on the touch screen of the phone based on the touch operation detected in the area identified by A1. In the second functional partition identified by A2, the phone may detect the click operation on a "Confirm" control part, which is the first control part in embodiments of the present invention, and send the selecting instruction to the wearable device. In addition, as shown in Fig. 3, the second functional partition further includes a "function key", which is the second control part. For example, the function key is the second control part for the volume adjustment, the work mode adjustment, or the cursor position calibration. The second functional partition may include one or more second control parts, and different second control parts indicate different functions.

It can be understood that different control parts are arranged in the functional partition, such that the mobile terminal may detect the user operation and send the corresponding instruction to the wearable device, thus realizing a simple interaction mode and improving the user experience.

In some embodiments, the touch screen displays (i.e. includes) a third control part and/or a fourth control part, and the method further includes: displaying a notification message in the wearable device in response to detecting a sliding operation to the third control part; and/or, displaying a menu in the wearable device in response to detecting a sliding operation to the fourth control part.

As shown in Figs. 2 and 3, a control part identified by L3 may be the third control part, and a control part identified by L4 may be the fourth control part. In some embodiments of the present invention, when detecting the sliding operation to the third control part, the mobile terminal displays the notification message in the wearable device. The sliding operation to the third control part may be a downward sliding operation. The notification message in the wearable device may be, for example, a call message, a short message, or an advertisement push, and the above notification message may also be displayed in a synchronous wearable device. When detecting the sliding operation on the fourth control part, the mobile terminal displays the menu in the wearable device. The sliding operation on the fourth control part may be an upward sliding operation, and the menu in the wearable device may be, for example, a function setting menu, or a menu list of applications in a main interface, and so on.

It should be noted that the embodiments of the present invention do not limit the position of the third control part and/or the fourth control part on the touch screen, the sliding direction for the third control part and/or the fourth control part, and the specific content of the displayed notification message and/or menu.

It can be understood that in the embodiments of the present invention, the touch screen of the mobile terminal may support the display of more information on the wearable device through the touch operation, thus facilitating the user to instantly obtain the information about the wearable device, and hence realizing high intelligence.

Embodiments of the present invention further provide an information interaction method, which is applied to the wearable device. Fig. 4 is another flow chart of an information interaction method according to embodiments of the present invention. As shown in Fig. 4, the information interaction method includes the following steps.

At step S21, a first control instruction sent by a mobile terminal is received. A touch screen of the mobile terminal includes at least one touch area configured to control a moving speed of a cursor, and the first control instruction is sent by the mobile terminal after detecting a touch operation in any touch area of the touch screen.

At step S22, according to the first control instruction, the cursor on a display interface of the wearable device is moved at the moving speed indicated by the touch area.

In embodiments of the present invention, the wearable device receives the first control instruction sent by the mobile terminal and moves the cursor on the display interface at the moving speed indicated by the touch area according to the first control instruction. As described above, the first control instruction may or may not carry the moving speed indicated by the touch area. In addition, the moving speed indicated by the touch area may be fast or slow, which is not limited in the embodiments of the present invention.

In some embodiments, the wearable device may also move the cursor in a moving direction indicated by the touch operation according to the first control instruction. For example, the first control instruction may carry the moving direction of the cursor, or the first control instruction may also carry an included angle. The included angle is an included angle between a connecting line of a touch operation point and a center of the touch area and a horizontal direction or a vertical direction. The wearable device determines the moving direction of the cursor according to the correspondence between the included angle and the moving direction, and then moves the cursor at the moving speed indicated by the touch area.

It can be understood that in embodiments of the present invention, the wearable device receives the first control instruction sent by the mobile terminal after detecting the touch operation in any touch area of the touch screen, and moves the cursor on the display interface at the moving speed indicated by the touch area according to the first control instruction. For example, the cursor may be accurately positioned based on the indicated slow moving speed. Or, when encountering a scene where an extensive movement is needed, the cursor may move based on the indicated fast moving speed, without the user controlling the touch screen of the mobile terminal many times, which can reduce the complexity of the user operation and make the interaction manner between the mobile terminal and the wearable device friendly.

In some embodiments, the method further includes changing a display state of a preset position range on the display interface, when the cursor moves into the preset position range of a preset object on the display interface according to the moving speed indicated by the touch area.

In some embodiments of the present invention, if the wearable device detects that the cursor is within the preset position range of the preset object on the display interface, the display state of the preset position range on the display interface is changed, such as highlighting the preset position range on the display interface, or flashing the preset position range at a certain frequency, and so on.

In some embodiments of the present invention, the preset object may be an application icon or a control part on the display interface of the wearable device, or may be a function key on a virtual keyboard displayed by the wearable device. The preset position range may be a surrounding area around the preset object, an area where the preset object is located, or an area that includes the area where the preset object is located and the surrounding area around the preset object. It should be noted that if the preset object is the application icon, the application indicated by the application icon may be an application of the wearable device itself, such as a phone application. The application indicated by the application icon may also be a third-party application installed in the wearable device, such as a WeChat application, etc. The application indicated by the application icon may also be an application in the mobile terminal.

In some embodiments of the present invention, the wearable device may receive a selecting instruction for a target object in the preset position range whose display state is changed sent by the mobile terminal based on the preset position range whose display state is changed, and perform a predetermined operation on the target object in the highlighted preset position range. The predetermined operation performed on the target object in the preset position range whose display state is changed may be, for example, an application opening operation, a character selecting operation, or the like. For example, when the application indicated by the application icon on the display interface of the wearable device is an application of the mobile terminal, the wearable device may send an instruction indicating to open the application indicated by the application icon to the mobile terminal after receiving the selecting instruction for the application icon. The mobile terminal starts the application according to this instruction, and may also send an interface of the application to the wearable device for display.

It can be understood that in embodiments of the present invention, when the cursor on the display interface of the wearable device moves into the preset range of the preset object on the display interface at the moving speed indicated by the touch area, the display state of the preset range is changed, thus allowing the user to instantly see the target object currently indicated by the cursor, facilitating the user to select the target object more accurately and conveniently based on the preset range whose display state is changed (for example, it is possible to determine a currently selected character or application based on highlighting when typing or clicking a certain application icon on the glasses screen), without the user repeatedly fine-tuning the cursor or repeatedly calibrating the orientation of the mobile terminal, thus realizing the high intelligence and improving the user operation experience.

In some embodiments, the display interface includes a main interface displayed after establishing a communication with the mobile terminal, and the main interface includes the application icon.

Changing the display state of the preset position range on the display interface when the cursor moves into the preset position range of the preset object on the display interface according to the moving speed indicated by the touch area includes: highlighting a preset peripheral area of the application icon on the main interface when the cursor moves to the preset peripheral area of the application icon on the main interface according to the moving speed indicated by the touch area.

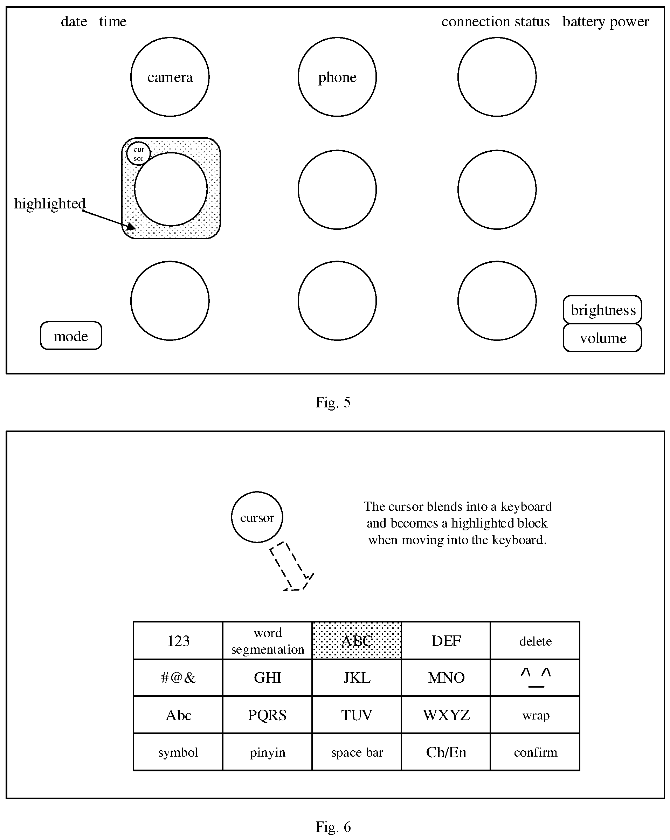

Fig. 5 is a schematic view of the display interface of the wearable device in the embodiments of the present invention. The display interface may be the main interface displayed after establishing the communication between the wearable device and the mobile terminal. As shown in Fig. 5, the display interface displays current time information, a current network connection status and a battery power of the wearable device, as well as control parts corresponding to functions such as brightness adjustment, volume adjustment, or mode adjustment. In addition, "camera", "phone" and other icons of various applications are also displayed. A circle on the display interface may represent an application identification. As shown in Fig. 5, when the cursor moves to the peripheral area of the application icon, the peripheral area is displayed in highlight.

In some embodiments of the present invention, the preset object is an application icon, and the preset position range refers to the preset peripheral area of the application icon. It can be understood that, the peripheral area of the application icon is displayed in highlight, thus facilitating the user to select the application more accurately and conveniently based on the highlighted peripheral area, achieving the opening of the application on the wearable device, and realizing good intelligence.

In some embodiments, the display interface includes an editing interface including a virtual keyboard, and the virtual keyboard includes a plurality of function keys. Changing the display state of the preset position range on the display interface when the cursor moves into the preset position range of the preset object on the display interface according to the moving speed indicated by the touch area includes: when the cursor moves to an area where any function key on the virtual keyboard is located according to the moving speed indicated by the touch area, highlighting the area of the function key where the cursor is located.

In some embodiments of the present invention, the editing interface including the virtual keyboard may be triggered to be displayed in a scene where typing is required, such as editing in WeChat or editing in browser. Fig. 6 is another schematic view of the display interface of the wearable device in embodiments of the present invention. As shown in Fig. 6, the editing interface of the virtual keyboard includes a plurality of function keys, such as character keys, numeric keys, and other function keys. When the cursor moves to an area where any function key on the virtual keyboard is located, the area is highlighted. Based on the displayed interface, if receiving the selecting instruction sent by the mobile terminal, the wearable device may output the content identified by the highlighted function key, such as a character in "ABC".

In embodiments of the present invention, the target object is any identification in the virtual keyboard, the preset position range refers to an area where the identification is located, and the predetermined operation is an operation that outputs the content identified by the identification.

It can be understood that the area on the editing interface where the function key is located is displayed in highlight, thus facilitating the user to select the content in the virtual keyboard more accurately and conveniently based on the highlighted area, achieving the output of the content in the virtual keyboard on the wearable device, and realizing good intelligence.

In some embodiments, the method further includes: displaying the cursor in a predetermined form when the cursor moves to an area on the editing interface except the virtual keyboard; and hiding the cursor when the cursor moves to the area on the editing interface where any function key of the virtual keyboard is located.

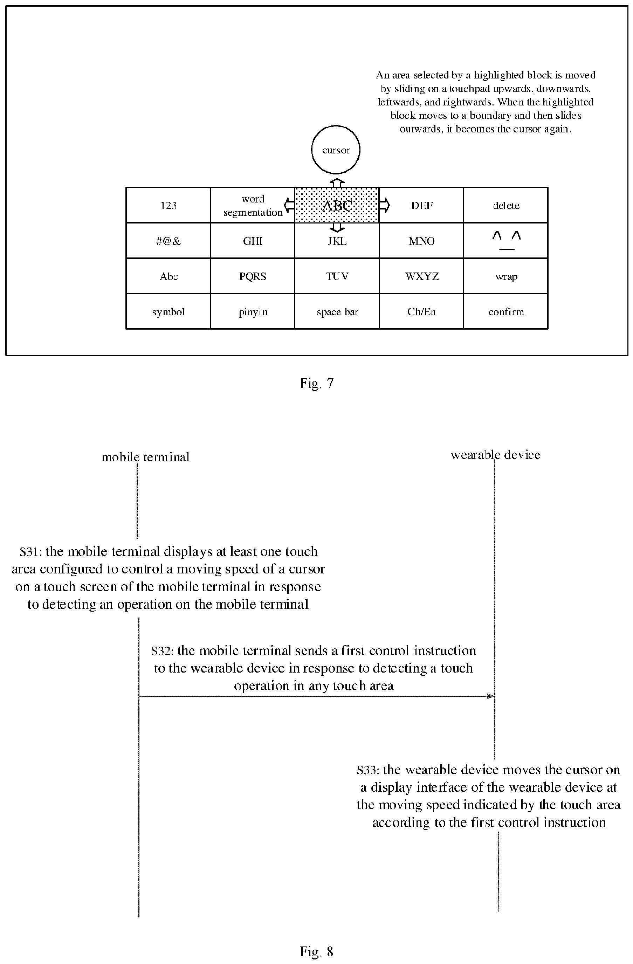

In some embodiments of the present invention, the cursor is displayed in different forms at different positions on the editing interface. As described with respect to Fig. 6, when the cursor moves to the area where any function key on the virtual keyboard is located, the area is highlighted. Fig. 7 is another schematic view of the display interface of the wearable device in embodiments of the present invention. As shown in Fig. 7, when a highlighted block moves to a boundary and then slides outwards, it becomes the cursor again.

In some embodiments of the present invention, on the editing interface of the wearable device, when the highlighted block switches between the areas of different function keys in the virtual keyboard, the cursor is hidden. After switching to an edge area and continuing to move outwards, the highlighted block may slide outwards again and become the cursor. It can be understood that this facilitates the user to know a current pointing situation of the cursor, thus improving the interaction intelligence.

Fig. 8 is a flow chart of an information interaction method according to embodiments of the present invention, which is applied to the mobile terminal and the wearable device. As shown in Fig. 8, the information interaction method includes the following steps.

At step S31, the mobile terminal displays at least one touch area configured to control a moving speed of a cursor on a touch screen of the mobile terminal in response to detecting an operation on the mobile terminal.

At step S32, the mobile terminal sends a first control instruction to the wearable device in response to detecting a touch operation in any touch area.

At step S33, the wearable device moves the cursor on a display interface of the wearable device at the moving speed indicated by the touch area according to the first control instruction.

In the embodiments of the present invention, the mobile terminal displays the at least one touch area configured to control the moving speed of the cursor on the touch screen based on the user operation, such that the cursor on the display interface of the wearable device can move according to the moving speed indicated by the touch area. For example, the cursor can be accurately positioned based on the indicated slow moving speed. Or, when encountering a scene where an extensive movement is needed, the cursor can move based on the indicated fast moving speed, without the user controlling the touch screen of the mobile terminal many times, which can reduce the complexity of the user operation and make the interaction manner between the mobile terminal and the wearable device friendly.

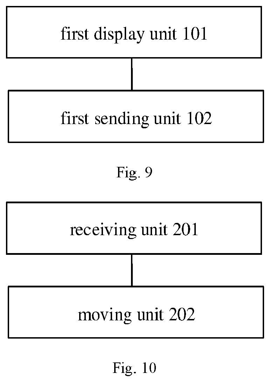

Fig. 9 is a block diagram of an information interaction device according to an embodiment, which is applied to the mobile terminal. The information interaction device includes: a first display unit 101 configured to display at least one touch area configured to control a moving speed of a cursor on a touch screen of the mobile terminal in response to detecting an operation on the mobile terminal; and a first sending unit 102 configured to send a first control instruction to a wearable device in response to detecting a touch operation in any touch area. The first control instruction is configured to instruct the cursor on a display interface of the wearable device to move according to the moving speed indicated by the touch area.

In some embodiments, the first display unit 101 is further configured to display the at least one touch area configured to control the moving speed of the cursor centered on a touch position of the touch operation, in response to detecting the touch operation on the touch screen of the mobile terminal.

In some embodiments, the at least one touch area configured to control the moving speed of the cursor includes at least two touch areas centered on the touch position, and each touch area is circular.

In some embodiments, the touch screen includes at least one functional partition. The first display unit 101 is further configured to display the at least one touch area configured to control the moving speed of the cursor on the touch screen of the mobile terminal in response to detecting the touch operation in a first functional partition of the at least one functional partition. The first functional partition is a partition configured to control a movement of the cursor.

In some embodiments, the device further includes: a second sending unit 103 configured to send a second control instruction to the wearable device in response to detecting the touch operation in a second functional partition of the at least one functional partition. The second control instruction is configured to control the wearable device to perform a function indicated by the second control instruction, and the second functional partition is a partition configured to control the wearable device to perform functions.

In some embodiments, the second functional partition includes a first control part and/or a second control part. The second sending unit 103 is further configured to send a selecting instruction for a target object pointed to by the cursor on the display interface to the wearable device in response to detecting a click operation on the first control part in the second functional partition, and/or send a device adjusting instruction to the wearable device in response to detecting a click operation on the second control part in the second functional partition. The device adjusting instruction is configured to control the wearable device to perform one of the following operations: volume adjustment, work mode adjustment, and cursor position calibration.

In some embodiments, the touch screen displays a third control part and/or a fourth control part. The device further includes a second display unit 104 configured to display a notification message in the wearable device in response to detecting a sliding operation on the third control part, and/or display a menu in the wearable device in response to detecting a sliding operation on the fourth control part.

Fig. 10 is another block diagram of the information interaction device according to an embodiment, which is applied to the wearable device. The information interaction device includes: a receiving unit 201 configured to receive a first control instruction sent by a mobile terminal, in which a touch screen of the mobile terminal includes at least one touch area configured to control a moving speed of a cursor, and the first control instruction is sent by the mobile terminal after detecting a touch operation in any touch area of the touch screen; and a moving unit 202 configured to move the cursor on a display interface of the wearable device at the moving speed indicated by the touch area according to the first control instruction.

In some embodiments, the device further includes a third display unit 203 configured to change a display state of a preset position range of a preset object on the display interface when the cursor moves into the preset position range of the preset object on the display interface according to the moving speed indicated by the touch area.

In some embodiments, the display interface includes a main interface displayed after establishing a communication with the mobile terminal, and the main interface includes an application icon. The third display unit 203 is further configured to highlight a preset peripheral area of the application icon when the cursor moves to the preset peripheral area of the application icon on the main interface according to the moving speed indicated by the touch area.

In some embodiments, the display interface includes an editing interface including a virtual keyboard, and the virtual keyboard includes a plurality of function keys. The third display unit 203 is further configured to, when the cursor moves to an area where any function key on the virtual keyboard is located according to the moving speed indicated by the touch area, highlight the area of the function key where the cursor is located.

In some embodiments, the device further includes: a fourth display unit 204 configured to display the cursor in a predetermined form when the cursor moves to an area on the editing interface except the virtual keyboard; and a hiding unit 205 configured to hide the cursor when the cursor moves to the area on the editing interface where any function key of the virtual keyboard is located.

Regarding the devices in the above embodiments, the specific manners for each unit to perform the operation have been described in detail in the embodiments of the methods, and will not be described in detail here.

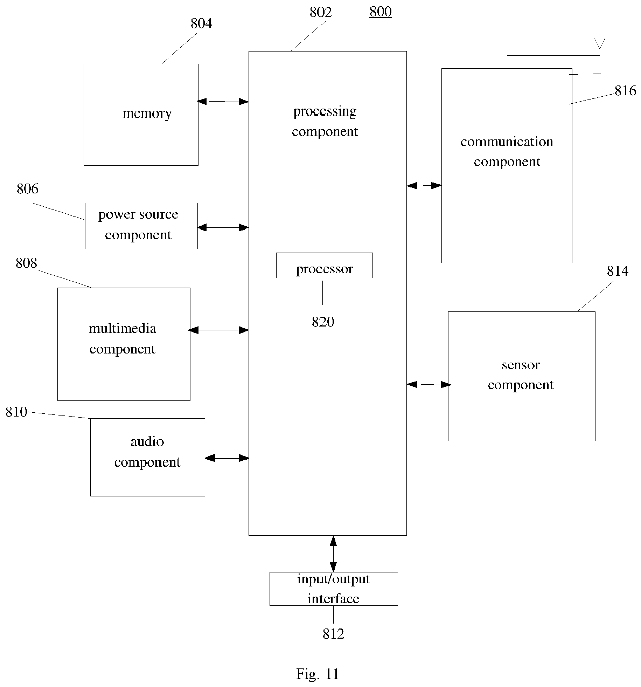

Fig. 11 is a block diagram of an electronic device according to an exemplary embodiment. For example, the electronic device (a device 800) may be the aforementioned mobile terminal or wearable device.

Referring to Fig. 11, the device 800 may include one or more of the following components: a processing component 802, a memory 804, a power source component 806, a multimedia component 808, an audio component 810, an input/output (I/O) interface 812, a sensor component 814, and a communication component 816.

The processing component 802 usually controls an overall operation of the device 800, such as operations associated with display, telephone calls, data communications, camera operations, and recording operations. The processing component 802 may include one or more processors 820 to execute instructions, to complete all or part of the steps in the above methods. In addition, the processing component 802 may include one or more units which facilitate interaction between the processing component 802 and other components. For example, the processing component 802 may include a multimedia unit to facilitate interaction between the multimedia component 808 and the processing component 802.

The memory 804 is configured to store various types of data to support operations at the device 800. Examples of such data include instructions for any application programs or methods operated on the device 800, contact data, phonebook data, messages, pictures, videos, etc. The memory 804 may be implemented using any type of volatile or nonvolatile storage devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power source component 806 provides power to various components of the device 800. The power source component 806 may include a power management system, one or more power sources, and other components related to generation, management, and distribution of power in the device 800.

The multimedia component 808 includes a screen that provides an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a duration and a pressure associated with the touch or swipe action. In some embodiments, the multimedia component 808 includes a front camera and/or a rear camera. When the device 800 is in an operation mode, such as a photographing mode or a video mode, the front camera and/or the rear camera may receive external multimedia data. Each of the front and rear cameras may be a fixed optical lens system or have a focus and optical zoom capability.

The audio component 810 is configured to output and/or input audio signals. For example, the audio component 810 includes a microphone (MIC) configured to receive an external audio signal when the device 800 is in an operating mode, such as a call mode, a recording mode, and a speech recognition mode. The received audio signal may be further stored in the memory 804 or transmitted via the communication component 816. In some embodiments, the audio component 810 further includes a loudspeaker, which is configured to output the audio signals.

The I/O interface 812 provides an interface between the processing component 802 and a peripheral interface unit, such as a keyboard, a click wheel, a button and the like. The buttons may include, but are not limited to, a home button, a volume button, a starting button, and a locking button.

The sensor component 814 includes one or more sensors for providing status assessments of various aspects of the device 800. For example, the sensor component 814 may detect an on/off state of the device 800, a relative positioning of the components, such as the display and the keypad of the device 800, a change in position of the device 800 or of a component of the device 800, a presence or an absence of the user's contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate wired or wireless communication between the device 800 and other devices. The device 800 may access a wireless network based on a communication standard, such as Wi-Fi, 2G, 3G, 4G, or 5G, or a combination of them. In an embodiment, the communication component 816 receives a broadcast signal or broadcast related information from an external broadcast management system via a broadcast channel. In an embodiment, the communication component 816 further includes a near field communication (NFC) unit to facilitate short-range communication. For example, the NFC unit may be implemented based on a radio frequency identification (RFID) technology, an infrared data association (IrDA) technology, an ultra-wideband (UWB) technology, a Bluetooth (BT) technology, and other technologies.

In an embodiment, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the methods described above.

In an embodiment, there is also provided a non-temporary computer-readable storage medium including an instruction, such as the memory 804 including the instruction. The instruction can be executed by the processor 820 of the device 800 to perform the methods described above. For example, the non-temporary computer-readable storage medium may be a ROM, a random access memory (RAM), a CD-ROM, a magnetic tape, a floppy disk, an optical data storage device, and the like.

A non-temporary computer-readable storage medium allows the mobile terminal to perform the information interaction method when instructions in the storage medium are executed by a processor of the mobile terminal. The method includes: displaying at least one touch area configured to control a moving speed of a cursor on a touch screen of the mobile terminal in response to detecting an operation on the mobile terminal; and sending a first control instruction to the wearable device in response to detecting a touch operation in any touch area. The first control instruction is configured to instruct the cursor on a display interface of the wearable device to move according to the moving speed indicated by the touch area.

A non-temporary computer-readable storage medium allows the wearable device to perform the information interaction method when instructions in the storage medium are executed by a processor of the wearable device. The method includes: receiving a first control instruction sent by a mobile terminal, in which a touch screen of the mobile terminal includes at least one touch area configured to control a moving speed of a cursor, and the first control instruction is sent by the mobile terminal after detecting a touch operation in any touch area of the touch screen; and moving the cursor on a display interface of the wearable device at the moving speed indicated by the touch area according to the first control instruction.

Other examples of the present invention will be apparent to those skilled in the art from consideration of the specification and practice of the present invention. The present invention is intended to cover any change, use or adaptation of the present invention, which complies with the general principles of the present invention and includes the common knowledge or conventional technical means in the art that are not disclosed herein.

## Claims

1. An information interaction method, applied to a mobile terminal, comprising:
displaying (S11) at least one touch area configured to control a moving speed of a cursor on a touch screen of the mobile terminal, in response to detecting an operation on the mobile terminal; and
sending (S12) a first control instruction to a wearable device in response to detecting a touch operation in any touch area, the first control instruction being configured to instruct the cursor on a display interface of the wearable device to move according to the moving speed indicated by the touch area.

2. The method according to claim 1, wherein displaying the at least one touch area configured to control the moving speed of the cursor on the touch screen in response to detecting the operation on the mobile terminal comprises:
displaying the at least one touch area configured to control the moving speed of the cursor centered on a touch position of the touch operation, in response to detecting the touch operation on the touch screen of the mobile terminal.

3. The method according to claim 2, wherein the at least one touch area configured to control the moving speed of the cursor comprises at least two touch areas centered on the touch position, and each touch area is circular.

4. The method according to any one of claims 1 to 3, wherein the touch screen comprises at least one functional partition;
wherein displaying the at least one touch area configured to control the moving speed of the cursor on the touch screen of the mobile terminal in response to detecting the operation on the mobile terminal comprises:
displaying the at least one touch area configured to control the moving speed of the cursor on the touch screen of the mobile terminal in response to detecting the touch operation in a first functional partition of the at least one functional partition, and the first functional partition being a partition configured to control a movement of the cursor.

5. The method according to claim 4, further comprising:
sending a second control instruction to the wearable device in response to detecting the touch operation in a second functional partition of the at least one functional partition, the second control instruction being configured to control the wearable device to perform a function indicated by the second control instruction, and the second functional partition being a partition configured to control the wearable device to perform a function.

6. The method according to claim 5, wherein the second functional partition comprises a first control part and/or a second control part,
wherein sending the second control instruction to the wearable device in response to detecting the touch operation in the second functional partition of the at least one functional partition comprises:
sending a selecting instruction for a target object pointed to by the cursor on the display interface to the wearable device in response to detecting a click operation on the first control part in the second functional partition;
and/or,
sending a device adjusting instruction to the wearable device in response to detecting a click operation on the second control part in the second functional partition, and the device adjusting instruction being configured to control the wearable device to perform one of following operations: volume adjustment, work mode adjustment, and cursor position calibration.

7. The method according to any one of claims 1 to 6, wherein the touch screen displays a third control part and/or a fourth control part, and the method further comprises:
displaying a notification message in the wearable device in response to detecting a sliding operation on the third control part;
and/or,
displaying a menu in the wearable device in response to detecting a sliding operation on the fourth control part.

8. An information interaction method, applied to a wearable device, comprising:
receiving (S21) a first control instruction sent by a mobile terminal, a touch screen of the mobile terminal comprising at least one touch area configured to control a moving speed of a cursor, the first control instruction being sent by the mobile terminal after detecting a touch operation in any touch area of the touch screen; and
moving (S22) the cursor on a display interface of the wearable device at the moving speed indicated by the touch area according to the first control instruction.

9. The method according to claim 8, further comprising:
changing a display state of a preset position range of a preset object on the display interface when the cursor moves into the preset position range of the preset object on the display interface according to the moving speed indicated by the touch area.

10. The method according to claim 9, wherein the display interface comprises a main interface displayed after establishing a communication with the mobile terminal, and the main interface comprises an application icon; and
wherein changing the display state of the preset position range of the preset object on the display interface when the cursor moves into the preset position range of the preset object on the display interface according to the moving speed indicated by the touch area comprises:
highlighting a preset peripheral area of the application icon on the main interface when the cursor moves to the preset peripheral area of the application icon on the main interface according to the moving speed indicated by the touch area.

11. The method according to claim 9 or 10, wherein the display interface comprises an editing interface comprising a virtual keyboard, and the virtual keyboard comprises a plurality of function keys; and
wherein changing the display state of the preset position range of the preset object on the display interface when the cursor moves into the preset position range of the preset object on the display interface according to the moving speed indicated by the touch area comprises:
when the cursor moves to an area where any function key on the virtual keyboard is located according to the moving speed indicated by the touch area, highlighting the area of the function key where the cursor is located.

12. The method according to claim 11, further comprising:
displaying the cursor in a predetermined form when the cursor moves to an area on the editing interface except the virtual keyboard; and
hiding the cursor when the cursor moves to the area on the editing interface where any function key of the virtual keyboard is located.

13. An electronic device, comprising:
a processor; and
a memory configured to store an instruction executable by the processor,
wherein the processor is configured to perform an information interaction method according to any one of claims 1 to 7, or is configured to perform an information interaction method according to any one of claims 8 to 12.
